# EUROPEAN PATENT SPECIFICATION

(11) **EP 2 411 700 B1**
(45) Date of publication and mention of the grant of the patent: **13.02.2013**
(21) Application number: 10710092.7
(22) Date of filing: 16.03.2010
(51) Int. Cl.: F16H 3/72

(54) **TRANSMISSION SYSTEMS AND ELECTRICAL POWER GENERATING APPARATUS**
ÜBERTRAGUNGSSYSTEME UND VORRICHTUNG ZUR ERZEUGUNG VON ELEKTRISCHER ENERGIE
SYSTEMES DE TRANSMISSION ET APPAREIL DE GENERATION D'ALIMENTATION ELECTRIQUE

(30) Priority: 24.03.2009 GB 0905033
(43) Date of publication of application: 01.02.2012
(73) Proprietor: Nexxtdrive Limited, London WC2N 5HR (GB)
(72) Inventor: MOELLER, Frank, H., Stafford ST17 0UN (GB)
(74) Representative: Jennings, Nigel Robin
(86) International application number: PCT/GB2010/000462
(87) International publication number: WO 2010/109162

(56) References cited:
- DE-A1-102005 018 662
- US-A1- 2007 265 127
- US-A1- 2008 176 699
- US-B1- 6 478 705

## Description

The present invention relates to transmission systems and is particularly, though not exclusively, concerned with automotive transmission systems, that is to say transmissions intended to transmit the propulsive power of an automotive engine or motor to the wheels of the vehicle. More specifically the invention is concerned with transmission systems of the type including an input, an output and an epicyclic geartrain comprising one or two epicyclic gearsets, two elements of which are connected to the rotors of respective motor/generators, the electrical connections of whose stators are connected together via a controller arranged to control the flow of electrical power between them.

Transmission systems of this type are known as power split transmissions in that power is transmitted by them partially mechanically and partially electrically. Such transmission is disclosed in US 20070265127 A1, which is considered to represent the closest prior art. For most of the time, one of the motor/generators will act as a generator and the power it produces is transmitted to the other motor/generator, which operates as a motor. The amount of electrical power that is transmitted between the two motor/generators is varied by the controller in response to, amongst other things, the position of the vehicle accelerator pedal and this results in a progressive change in the transmission ratio. The transmission system therefore has a continuously variable transmission ratio.

Transmission systems of this type are generally of so-called single regime type, which means that all of the transmission ratios desirable for propelling a motor vehicle are obtainable with it without using one or more clutches to change over into a different regime. Whilst the absence of clutches is very desirable, the use of a single regime is associated with a disadvantage, namely that the proportion of the power transmitted by the system which is transmitted electrically can rise to as high as 50% or even more. This is undesirable for two separate reasons. Thus firstly, the efficiency with which power is transmitted electrically by the transmission is significantly lower than that with which power is transmitted mechanically due to the electrical losses and this means that the higher the proportion of the power that is transmitted electrically the lower is the overall efficiency of the transmission system. Secondly, the cost of a motor/generator is directly related to the electrical power and torque which it absorbs or generates and thus the larger the proportion of the total power that is transmitted electrically by the transmission system the larger and thus more expensive are the motor/generators.

It is therefore an object of the invention to provide a transmission system of the type referred to above in which the maximum proportion of the total power transmitted which is transmitted electrically is significantly lower than in previous systems, thereby enabling the transmission system to be smaller, lighter and cheaper than previous systems.

Opinions on the likely direction of the evolution of motor transport vary wildly between the extremes of pure electric vehicles, powered by batteries or supercapacitors and conventional vehicles powered only by an internal combustion engine. Conventional vehicles suffer from problems related to the cost of fuel and environmental considerations and pure electric vehicles are only suitable for short distances, though they could be quite successful in city traffic for commuters, delivery vehicles and city buses.

The environmentally and economically correct solution for the future is likely to be a Hybrid compromise with the vehicle powered by both an electric motor and an internal combustion engine, whereby the proportion of engine to electric power and capacity will probably vary from 85/15% to 15/85%. Notwithstanding the disadvantages referred to above of transmitting a large amount of power electrically, the demand for cleaner and quieter transport is likely to mean that 100% battery powered vehicles, especially smaller cars, scooters and motorcycles, could soon be mass produced.

Smaller propulsion power will probably be required for the engines of future Hybrid vehicles because in a Hybrid vehicle the engine is generally assisted by one or more electric motors. As a result of the reduced power demand from the engine, the engine will be much smaller, making it possible to reduce the number of cylinders, to make the engine less costly and more efficient. However, while, for instance, a 2 cylinder opposed piston engine can be perfectly balanced as regards oscillating and reciprocating masses, 4 stroke engines with one, two or three cylinders have very high torsional irregularity and torsional vibration problems, which lead to unacceptable noise, vibration, and harshness (NVH) levels, especially at low vehicle speeds. It is therefore a further object of this invention to reduce the NVH levels, by torsionally balancing the engine, if used.

It is yet a further object of the invention to provide a transmission system which is universally applicable and may thus be used to transmit only the power produced by an internal combustion engine or may transmit only the power which it has produced itself by the energisation of one or both of the motor/generators or may be used as a power combining transmission which transmits both power produced mechanically by an internal combustion engine and power produced electrically by energisation of one or both of the motor/generators.

According to a first aspect of the present invention a transmission system includes all the features of the appended claim 3.

Thus the transmission system in accordance with this aspect of the present invention includes two 3 branch differentials, the two sun gears of which are connected to rotate together and the planet carrier of one of which is connected to rotate with the annulus gear of the other. The two connected sun gears and the input are connected to the rotors of respective electric motor/generators, (always E2) whose electrical stator connections are connected together via a controller. The input is selectively connectable to the other planet carrier and to the other annulus gear by first and second selectively operable clutches. In use, only one or other of these clutches is of course normally engaged and whilst the full necessary range of transmission ratios is obtained, the lower transmission ratios are obtained in one regime in which one of the clutches is engaged and the higher ratios are obtained in the other regime whilst the other clutch is engaged. The result of this is that the maximum torque acting on, and the maximum electrical power flowing through each electrical machine is significantly reduced by comparison with known transmission systems of this general type. This results in a significant increase in the overall operating efficiency of the transmission system and, equally importantly, in the possibility of reducing the size and cost of the two machines, whereby the overall cost and thus also weight of the entire transmission system is also reduced.

The two epicyclic gearsets may be wholly separate and of different transmission ratio but it is preferred that the Rₒ ratio of the two gearsets, that is to say the ratio of the speed of rotation of the sun gear and the annulus gear when the planet carrier is held stationary, is substantially the same and that the two sun gears are integral and constituted by a single sun gear. The combination of the two sun gears will result in a simplification and in a reduction in the part count. It is further preferred that the first planet gears are the same as the second planet gears and that the first annulus gear is the same as the second annulus gear and this commonality of components will result in a further manufacturing simplification.

However, the use of two epicyclic gearsets with a single common sun gear and with all the planet gears being the same and the two annulus gears being the same opens up the possibility of only using a single gearset. Thus according to a second aspect of the present invention, a transmission system includes an input, an output and an epicyclic geartrain comprising a sun gear in mesh with a set of planet gears, which are rotatably carried by a planet carrier and are in mesh with an annulus gear, the sun gear and the input being connected to the rotors of respective electric motor/generators, the electrical stator connections of which are connected together via a controller arranged to control the flow of power between them, the input being selectively connectable to the planet carrier and the annulus gear by first and second selectively operable clutches, respectively, and the output being selectively connectable to the planet carrier and the annulus gear by third and fourth selectively operable clutches, respectively, whereby the transmission system has two regimes.

Since the epicyclic geartrain in this transmission system only includes three components and the sun gear is connected to one of the electric motor/generators, the other two components, namely the annulus gear and the planet carrier, will both have to be used as an input and an output in both regimes. This does of course necessitate not only the input being selectively connectable to the planet carrier and the annulus gear by first and second selectively operable clutches but also the output being selectively connectable to the planet carrier and the annulus gear by third and fourth selectively operable clutches. Neither the annulus gear nor the planet carrier can clearly be connected to both the input and the output at the same time and one regime is therefore obtained with the input connected to the planet carrier and the output connected to the annulus gear whilst the other regime is obtained with the input connected to the planet gear and the output connected to the planet carrier.

In use, the change from one regime to the next will be effected automatically, preferably under the control of the control system. It would be theoretically possible for the change from one regime to another to occur at any speed but it will be appreciated that if the output speeds of the two clutches on the input side are different at the time a regime change occurs, it will be necessary firstly for the clutch associated with the regime currently used to be disengaged and then for the clutch of the next regime to be engaged. This will inevitably result in a certain discontinuity or jerkiness in the driving performance of the vehicle. Furthermore, it would necessitate the use of friction clutches because it will be necessary for the components of the or each gearset, which are rotated at a speed dictated by the transmission ratio of the first regime, to be accelerated or decelerated rapidly to correspond to the speed that will be required in the other regime. It is therefore preferred that the first and second clutches are controlled by the control system and the control system is programmed to change from one regime to the other when the output speeds of the first and second clutches are substantially the same. This opens up the possibility of engaging the clutch of the next regime to be used and then subsequently disengaging the clutch of the previous regime, which means that the clutches of the two regimes will briefly be engaged at the same time and there will be no discontinuity or jerkiness in the driving performance of the vehicle. Furthermore, this feature permits the selectively operable clutches to be dog clutches, that is to say clutches which operate with positive engagement rather than frictional engagement, and such clutches are considerably cheaper and less subject to wear.

In the second aspect of the invention, in which third and fourth clutches are also provided, it is preferred that these third and fourth clutches are also controlled by the control system and that the control system is programmed to change from one regime to the other when the input speeds of the third and fourth clutches are substantially the same.

However, whilst it is necessary in order to achieve a smooth regime change that the output sides of the first and second clutches, and also the input sides of the third and fourth clutches, if provided, are rotating at the same speed, it is now appreciated that this alone is not sufficient. Thus even if the regime change occurs when the output speeds of the first and second clutches are the same, if the speed of one or both of the electrical machines or of any of the components of the geartrain is significantly different immediately after the regime change to immediately before it, the torque required to accelerate or decelerate the machine or component in question to its new speed after the regime change will result in a perceptible discontinuity or jerkiness in the driving characteristics of the vehicle. It is therefore preferred that the or each gearset and its connection to the clutches are such that when the transmission is changed from one regime to another, the speed of each motor/generator is substantially the same before and after the regime change. In practice, this condition will be fulfilled if the regime change is effected at a point at which the speed of the two electrical machines is the same and at this point all the components will be rotating at the same speed, i.e. the whole gearset will be rotating as a solid body.

The features referred to above may find application in transmission systems other than those of the types referred to above and thus in accordance with a further aspect of the present invention there is provided a transmission of the type including an input, an output and an epicyclic geartrain, two elements of the geartrain being connected to the rotor of a respective motor/generator, the electrical connections of whose stators are connected together via a controller arranged to control the flow of electrical power between them, two elements of the geartrain being connected to the input by a respective selectively operable clutch, whereby the transmission system has two regimes, the transmission system including speed sensors arranged to produce a signal indicative of the speeds of the outputs of the clutches and the control system being programmed to change the transmission system from one regime to another when the said speeds are the same, the geartrain and its connections to the input being so arranged that the speed of each motor/generator is the same before and after changing from one regime to another. Expressed in other words, this further aspect of the present invention provides that the transmission system is changed from one regime to another when the speeds of all the components of the gear train are the same.

As mentioned above, the geartrain may include a single epicyclic gearset comprising a sun gear, a set of planet gears and an annulus gear and in this event clutch controlled connections of both the input and the output to elements of the gearset will be necessary. If, however, the geartrain comprises two or more compounded gearsets, clutch controlled connection of only the input or the output to elements of the geartrain will be sufficient to enable two different regimes to be achieved.

Indeed, it is possible to provide a transmission system of the general type referred to above with two regimes by providing two selectively operable clutches on the output side only of the geartrain and thus in accordance with yet a further aspect of the present invention there is provided a transmission of the type including an input, an output and an epicyclic geartrain, two elements of the geartrain being connected to the rotor of a respective motor/generator, the electrical connections of whose stators are connected together via a controller arranged to control the flow of electrical power between them, two elements of the geartrain being connected to the output by a respective selectively operable clutch, whereby the transmission system has two regimes, the transmission including speed sensors arranged to produce a signal indicative of the speeds of the inputs of the clutches and the controller being programmed to change the transmission system from one regime to another when the said speeds are the same, the geartrain and its connections to the output being so arranged that the speed of each motor/generator is the same before and after changing from one regime to another. Thus again a regime change is effected when the speeds of all the components of the gearset are the same.

Thus a change in regime is effected under the control of the control system when the speeds of the outputs of the first and second clutches are the same and also, if third and fourth clutches are provided, when the speeds of the inputs to those clutches are the same. Speed sensors will be arranged to measure those speeds directly or some other parameters whose values are indicative of those speeds. The geartrain and its connections to the clutches are so arranged that the speed of each motor/generator is the same before and after a regime change, whereby no sudden acceleration or deceleration of the motor/generators or the components of the gearset occurs and the regime change is therefore imperceptible to the occupants of a vehicle. If the geartrain includes two epicyclic gearsets and one element of each gearset is connected directly to its associated clutch on the input side, the speed of each motor/generator will inherently be the same before and after a regime change which is effected when the speeds of the two outputs to the clutches are the same. If, however, the connection of one or both gearsets to the associated clutch includes gearing which alters the transmission ratio, it is possible for the speeds of the motor/generators to be different before and after a regime change, even if the regime change is effected when the speeds of the outputs of the clutches is the same. It may, however, be ensured in this event that the speeds of the motor/generators are in fact the same before and after a regime change by providing the meshing elements of the gearsets, which will in practice include at least two of a sun gear, planet gears and an annulus gear, with an appropriate number of teeth, that is to say by ensuring that the Rₒ ratios of the gearsets have appropriate values. This is in practice quite easy to achieve. Thus there will be one output speed at which a regime change will result in the speeds of the two motor/generators being the same before and after the change occurs. This speed is determined and the ratio of the speeds of the input members of the two gearsets is determined at that speed. Step-up or step-down gearing which produces a speed change of the same ratio is then introduced into the connection between one of the input members and the associated clutch to ensure that the speeds of the outputs of the two clutches are the same at that speed.

In the case of synchronous electric machines, e.g. electronically commutated permanent magnet machines, the controller will inherently know the position of the two rotors and the sensors may be constituted by a part of the programming of the controller which will then effect a regime change when the speeds of the two rotors are the same. For other types of machine s it may be necessary to provide separate speed sensors and these may be of any appropriate known type.

As mentioned above, an important advantage of ensuring that regime changes occur when the output speeds of the first and second clutches are the same, and preferably also that the speeds of all the components of the geartrain are the same, is that the clutches need not be of friction type and it is preferred that they are of positive engagement type, e.g. dog clutches. These clutches may, however, also be of the type which include selectively engageable teeth or splines provided on two coaxially rotating shafts or other members, one of which is movable axially to engage or disengage the two sets of teeth or splines.

In connection with the first aspect of the invention referred to above, in which the transmission system includes only first and second clutches, it is preferred that the other of the planet carriers and the other of the annulus gears are connected to respective sets of splines and the first and second clutches include a common movable clutch member which is connected to rotate with the input shaft and carries first and second sets of splines, the clutch member being movable between a position, in which the first set of splines is in engagement with the splines on the other of the planet carriers, and a position, in which the second set of splines is in engagement with the splines on the other of the annulus gears. Thus in this embodiment it is necessary for only a single member to be moved by any appropriate actuator between two positions to achieve engagement of the first clutch and disengagement of the second clutch in one position and disengagement of the first clutch and engagement of the second clutch in the other position.

In the second aspect of the invention referred to above, in which there are not only first and second clutches but also third and fourth clutches, it is preferred that the planet carrier is connected to two sets of splines and the annulus gear is also connected to two sets of splines, the first and second clutches include a first common movable clutch member which is connected to rotate with the input shaft and carries first and second sets of splines and the third and fourth clutches include a second common movable clutch member, which is connected to rotate with the output shaft and carries third and fourth sets of splines, the first and second clutch members being movable together between a position, in which the first set of splines on the first clutch member is in engagement with one of the sets of splines on the planet carrier and the third set of splines on the second clutch member is in engagement with one of the sets of splines on the annulus gear, and a position in which the second set of splines on the first clutch member is in engagement with the other set of splines on the annulus gear and the fourth set of splines on the second clutch member is in engagement with the other set of splines on the planet carrier. In this embodiment, a change from one regime to another may therefore again be effected by a single actuator which moves the first and second clutch members together between a position in which the first and third clutches are engaged and the second and fourth clutches are not and a position in which the second and fourth clutches are engaged and the first and third clutches are not.

Due to the fact that regime change occurs at a point at which all the components of the geartrain are rotating at the same speed, it is readily possible to bring the cooperating sets of splines into and out of engagement with one another. However, in order to deal with any slight mis-match in the speeds of two sets of splines which are to be engaged, it is preferred that each cooperating pair of sets of splines is provided with speed equalisation means, e.g. of synchromesh type which ensures that as the splines approach one another their speed is brought to be truly equal, thereby facilitating ready engagement of those sets of splines.

The transmission system may be used with a purely electric vehicle and in this event the mechanical power is produced by one or even both of the motor/generators, one of which is of course connected to the input shaft and can therefore apply an input torque to it. However, the transmission system may also be used simply to transmit the power produced by an internal combustion engine to the wheels of a vehicle with a selectable, infinitely variable transmission ratio. Alternatively, the transmission system may be used in a hybrid vehicle in which the propulsive power is produced in part by an internal combustion engine and in part by the motor/generator connected to the input and in this event the transmission system will not only transmit the mechanically produced and electrically produced power to the wheels of the vehicle with a selectable, infinitely variable transmission ratio but will also operate as a power combining mechanism to combine the power produced by the internal combustion engine with the power produced by the motor/generator connected to the transmission input. The invention therefore also embraces a transmission system of the type referred to above in combination with an internal combustion engine, the output shaft of which is connected to the input of the transmission system.

In connection with a Hybrid vehicle, it may be desired to drive the vehicle largely or solely by means of the internal combustion engine at certain times but to drive it solely electrically at other times and in order to avoid the electric motor/generator connected to the input shaft also driving the internal combustion engine at such times, it is preferred that the output shaft of the engine is connected to the input of the transmission system via a selectively operable clutch, which is of course disengaged at those times when the motive power is to be produced by one or both of the motor/generators rather than the internal combustion engine.

The transmission system may be used not only on four-wheeled vehicle, but also on two-wheeled vehicles, that is to say on motorcycles, and in this event it is of course preferred for reasons of balance of the motorcycle that the engine is situated substantially on the fore and aft centreline of the motorcycle and in this event it is preferred that the engine is situated between the two motor/generators. In this event, the output shaft of the engine may be connected directly to one of the motor/generators and may be connected also to the epicyclic geartrain via a connection which includes a freewheel which permits rotation in one direction only. This means that if the motorcycle is to be driven only electrically, the driving motor/generator will produce only rotation of the output of the transmission system, and thus the driven wheel of the motorcycle, and will not also drive the internal combustion engine.

As mentioned above, internal combustion engines can have very high torsional irregularity and torsional vibration problems, which can lead to unacceptable HNV levels. This problem can, however, largely be overcome if the rotor of one of the motor/generators is connected to the input of the transmission, and thus also, in use, to the output shaft of the internal combustion engine, by step-up gearing, preferably of epicyclic type, so arranged that the rotor rotates in the opposite direction to the input, the ratio of the step-up gearing being selected so that the engine and the said rotor are torsionally balanced. Thus in this embodiment the rotor connected to the input will rotate faster than the input and in the opposite direction in order to achieve overall torsional balance. This higher speed of the rotor is desirable firstly because many electrical machines, particularly induction machines, operate more effectively at high speed and secondly because the moment of inertia of a rotating object is proportional to the square of its speed and since the mass of the rotor of the motor/generator in question will generally be significantly less than the mass of the rotating components of the internal combustion engine, it is necessary for the rotor to rotate faster than the internal combustion engine in order to be able to achieve torsional balance with it.

All of the embodiments referred to above relate to a transmission system for a power consuming apparatus which transmits power generated mechanically and/or electrically to one or more driven members, such as one or more drive wheels of a vehicle. The transmission system in accordance with the present invention is, however, also suitable for use with an electrical power generating apparatus, whose input comprises a fluid driven shaft, e.g. a shaft connected to a wind turbine, water turbine or the like. In this event, the requirements are reversed and the arrangement is therefore reversed also and the first aspect of the invention referred to above is modified in that instead of the input being connected to the rotor of a motor/generator, it is the output that is so connected and it is also the output rather than the input which is selectively connectable to the other of the planet carriers and to the other of the annulus gears by first and second selectively operable clutches. The second aspect of the invention is also modified by connecting the output rather than the input to the rotor of a motor/generator. In such power generating apparatus, at least one of the motor/generators will produce excess electrical power which is then supplied e.g. to the electrical mains power supply. These further aspects of the invention may also include the further features referred to above in connection with the first and second aspects.

Further features and details of the invention will be apparent from the following description of certain specific embodiments, which is given by way of example only, with reference to the accompanying wholly or partially diagrammatic drawings, in which:
Figure 1 shows a transmission system for an all-electric motor vehicle;
Figure 2 shows a transmission system very similar to that of Figure 1 but with the two motor/generators nested coaxially within one another;
Figure 3 shows a further modification of the transmission system of Figure 1 in which the two sun gears are of the same size and are integrated into a single common sun gear;
Figure 4 shows a transmission system for an all-electric vehicle in which the two motor/generators are not coaxial and the clutches are of positive engagement splined type rather than friction type;
Figure 5 shows a transmission system for a Hybrid vehicle which also includes an internal combustion engine;
Figure 6 shows a modified version of the transmission system shown in Figure 5;
Figure 7 shows a further modified version of the transmission system shown in Figure 5 which includes only a single epicyclic gearset;
Figure 8 shows a modified version of the transmission system shown in Figure 7;
Figure 9 shows a modified version of the transmission system shown in Figure 8 suitable for use on motorcycles and front wheel drive vehicles.
Figure 10 shows a further transmission system in accordance with the invention for use with a wind turbine.

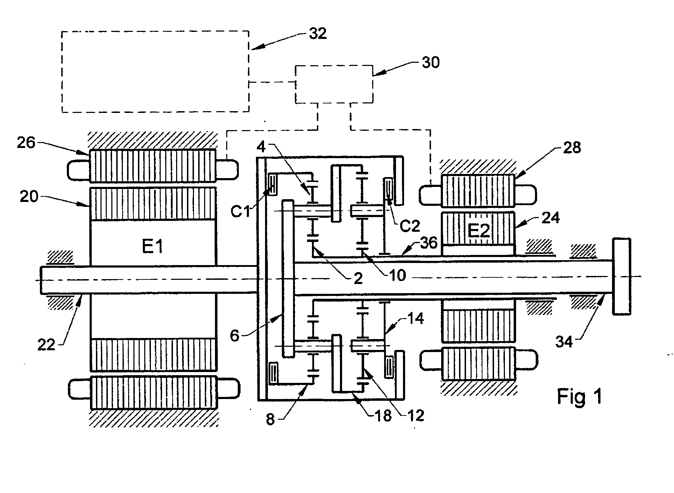

Referring firstly to Figure 1, the transmission system includes an epicyclic geartrain comprising two three-branch epicyclic gearsets. The first gearset includes a sun gear 2, which is in mesh with a number of planet gears 4 rotatably carried by a planet carrier 6. The planet gears 4 are in mesh with an annulus gear 8. The second gearset includes a sun gear 10, which is connected to rotate with the sun gear 2 and is in mesh with a number of planet gears 12. The planet gears 12 are rotatably carried by a second planet carrier 14 and are in mesh with a second annulus gear 18. The second annulus gear 18 is connected to rotate with the first planet carrier 6. The transmission system also includes two motor/generators, E1, E2, and the rotor 20 of E1 is connected to rotate with an input shaft 22 whilst the rotor 24 of E2 is connected to rotate with the two sun gears 2, 10 by a shaft 36. The electrical connections of the two stators 26, 28 are connected together via a controller 30, which is also connected to a store of electrical energy, typically a battery, though a supercapacitor might also be possible.

The input shaft 22 is selectively connectable to the first annulus gear 8 by means of a first selectively operable friction clutch C 1 and is also selectively connectable to the second planet carrier 14 by a second selectively operable friction clutch C2. The two clutches C1, C2 are connected to be controlled by the controller 30.

In use, only one of the clutches C1, C2 will be engaged and it will be supposed that the first gearset provides a lower set of transmission ratios than the second gearset and thus that when the vehicle is started the clutch C1 is engaged and the clutch C2 is therefore disengaged. The motor/generator E1 is energised by the battery 32 and its power is transmitted through clutch C1 and passes through the two compounded gearsets to the output shaft 34, which is connected to the first planet carrier 6. The second motor/generator E2 is rotated by the connected sun gears and operates as a generator and the power which it produces is transmitted via the controller to the other motor/generator E1 and used in part to power it. The transmission ratio of the transmission system is controlled as desired by controlling the speed of the rotor 24 of the motor/generator E2 by means of the controller 30. The speeds of the components of the two gearsets are measured by means of speed sensors, which are connected to or form part of the controller 30, and as the speed of the vehicle increases, a time will come when the speeds of all the components is the same. Clutch C1 is then disengaged and clutch C2 is engaged. The engagement and disengagement of the two clutches may occur simultaneously or C2 may be engaged somewhat before disengagement of C 1 so as to ensure no jerkiness but this will of course not be perceived by the user because the output sides of these two clutches are rotating at the same speed. The higher ratios provided by the second gearset are then made use of.

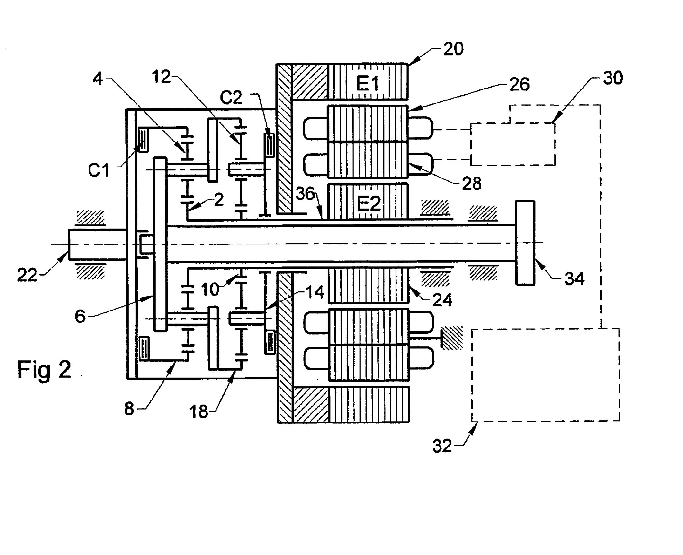

The embodiment of Figure 2 is very similar to that of Figure 1 and the same reference numerals have been used. The primary distinction of this embodiment is that the two motor/generators are nested within one another and the rotor 20 of E1 is situated outside the stator 26 and not inside it. In other respects, the construction is much the same as that of Figure 1 and its operation is also the same.

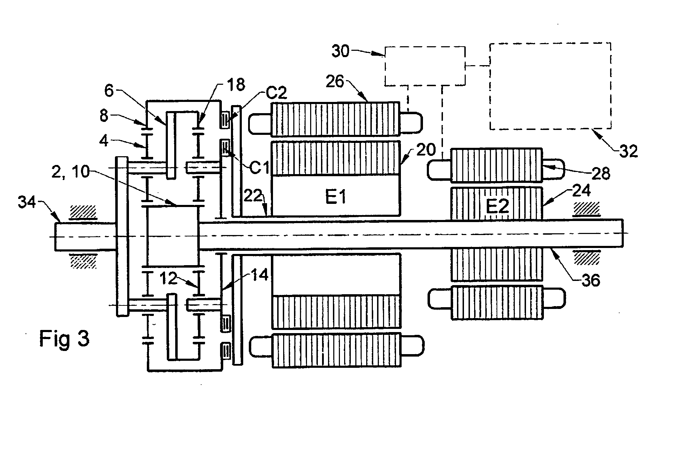

The embodiment of Figure 3 is again similar to that of Figure 1 and the same reference numerals are again used. However, in this case the two motor/generators are both on the same side of the two epicyclic gearsets and the output is on the left-hand side rather than the right-hand side. However, in this case the two sun gears are of the same size and are integrated into a single common sun gear 2, 10 and the two gearsets have the same Rₒ ratio, in this case 3.

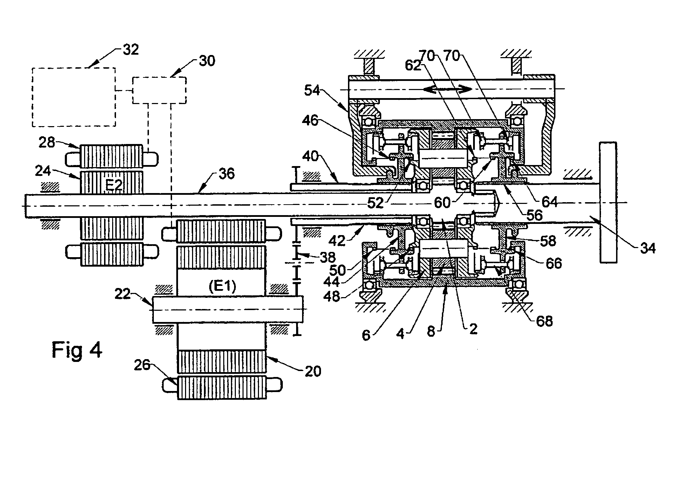

The embodiment of Figure 4 differs from that of Figures 1, 2 and 3 in a number of respects. Thus the two motor/generators are no longer coaxial and whilst the motor/generator E2 is coaxial with the geartrain, the motor/generator E1 is not. More importantly, the epicyclic geartrain does not consist of two compounded gearsets but has only a single gearset. This gearset includes a sun gear 4, which constitutes an integral portion of the shaft 36 connected to the rotor 24 of the motor/generator E2. The sun gear 4 is again in mesh with a number of planet gears 4, which are again in mesh with an annulus gear 8. The planet gears 4 are rotatably carried by a planet carrier 6.

The input shaft 22 connected to the rotor 20 of the motor/generator E1 is connected by one or more gearwheels 38 to rotate a tubular shaft 40 extending around the shaft 36. The shaft 40 has a splined portion 42, which carries a first clutch member 44, which is keyed by means of internal splines to rotate with the shaft 40 but is nevertheless movable axially with respect to the shaft 40. The clutch member 44 carries two sets of teeth or splines 46, 48 which cooperate with respective sets of teeth or splines 50, 52 carried by the annulus gear 8 and the planet carrier 6, respectively. The clutch member 44 is keyed to a clutch actuating member 54 to be moved by it to the left and the right by virtue of its internal splines sliding along the splines on the shaft 40. The clutch actuating member 54 is movable by means of an actuator (not shown), which is controlled by the control system, to move the clutch member 44 between the position shown in Figure 4 in which one of its set of splines 48 is in engagement with the opposing set of splines formed on the planet carrier, whereby the input shaft 22 is therefore connected by these meshing splines to the planet carrier 6, and a position in which the other set of splines 46 is in mesh with the splines 50 connected to the annulus gear 8, whereby the input shaft 22 is connected to rotate with the annulus gear 8.

The output shaft 34 also has an externally splined portion 56, extending around which is a second clutch member 58, which is formed with internal splines in mesh with the splines on the shaft 34, whereby the clutch member 58 rotates with the output shaft 34 but is movable longitudinally with respect to it. The clutch member 58 is substantially the same as the clutch member 44 and therefore carries a third set of splines 60, which cooperate with a further set of splines 62 formed on the planet carrier 6, and a fourth set of splines 64, which cooperate with a further set of splines 66 connected to the annulus gear 8. The clutch member 58 is also keyed to the clutch actuating member 54 to be moved by it parallel to the length of the output shaft 34. Operation of the actuator connected to the clutch actuation member 54 will therefore move the clutch member 58 from the illustrated position in which the splines 64 and 66 are in mesh and the output shaft 34 is therefore connected to rotate with the annulus gear 8, and a further position in which the splines 60 and 62 are in mesh and the output shaft 34 is therefore connected to rotate with the planet carrier 6. Due to the fact that the two clutch members 44, 58 are connected to a common clutch actuation member 54, the two clutch members are moved together parallel to the shafts 34, 36 between the positions illustrated in which the input shaft 22 is connected to rotate with the planet carrier 6 and the output shaft 34 is connected to rotate with the annulus gear 8 and a position in which the input shaft 22 is connected to rotate with the annulus gear 8 and the output shaft 34 is connected to rotate with the planet carrier 6.

It will be seen that each clutch member 44, 58 has a number of holes formed in it, through which a respective rod 68 passes. At each end of each rod 68 are bevelled speed equalisation members 70. When one of the clutch members is moved to the left or the right in order to bring one of its set of splines into engagement with the corresponding set of splines on the carrier member 6 or annulus gear 8, it initially moves with respect to the associated rod 68 but then engages the speed equalisation member at the end of those rods 68 and forces them into engagement with corresponding bevelled speed equalisation surfaces formed on the planet carrier 6 and the planet gear 8. This engagement of the speed equalisation surfaces occurs before the sets of splines comes into engagement and serves to ensure that when the two sets of splines do in fact come into engagement their speed of rotation is truly equal, thereby rendering engagement of the sets of splines readily possible. The speed equalisation members therefore act in a manner similar to the known synchromesh speed equalisers in a conventional automotive gearbox.

Accordingly, in the embodiment of Figure 4, when it is desired to change regime, the clutch actuator is actuated to move the connection of the input shaft 22 from one to the other of the planet carrier 6 and the annulus gear 8 whilst simultaneously the connection of the output shaft 34 is moved from one to the other of the annulus gear 8 and the planet carrier 6.

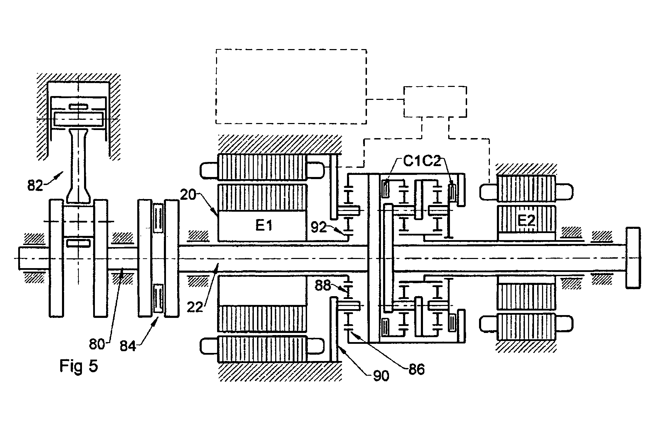

The embodiment of Figure 5 is much the same as the embodiment of Figure 1 but is intended for use with a Hybrid vehicle which is to be driven in part by an internal combustion engine and in part electrically by virtue of the application of electrical power to one or both of the motor/generators. The input shaft 22 is therefore connected to the output shaft 80 of an internal combustion engine 82, which is shown only schematically. The connection of the shafts 22 and 80 is by way of a further selectively operable clutch 84. The connection of the input shaft 22 to the rotor 20 of the motor/generator E1 is in this case not direct but by means of direction-reversing, step-up gearing of epicyclic type. The input shaft 22 is thus connected to rotate with the annulus gear 86 of a further epicyclic gearset, which is in mesh with planet gears 88, which are rotatably carried by a planet carrier 90. The planet carrier 90 is connected to ground and is thus unable to rotate. The planet gears 88 are in mesh with a sun gear 92, which is connected to the rotor 20 of the motor/generator E1. Accordingly, when the input shaft 22 rotates in one direction, the rotor 20 of E 1 rotates at a multiple of that speed and in the opposite direction. The step-up ratio of the epicyclic gearset 86, 88, 92 is set to be equal to the square root of the ratio of the mass of the rotatable components of the internal combustion engine and the mass of the rotor 20 of E1 such that when the engine is operating, it is fully torsionally balanced by the faster counter-rotation of the rotor 20. The vehicle may be driven solely by the internal combustion engine, in which event the transmission system will serve merely to transmit the power of the engine to the wheels at a variable transmission ratio determined by the controller, which adjusts the transmission ratio by adjusting the flow of electrical power between the two motor/generators. Alternatively, or at certain times, the drive of the vehicle may be in part by the internal combustion engine and in part electrically by the production of power by one or both of the motor/generators. In this event, the transmission system will not only transmit the power to the vehicle wheels but will also combine the mechanical power from the engine with the electrical power produced by the motor/generators. If it is desired to drive the vehicle only electrically, the clutch 84 is disengaged so that the engine is not driven in the reverse direction.

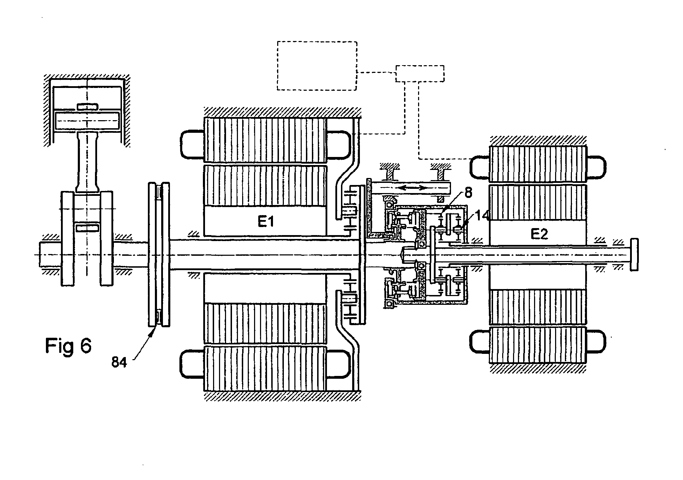

The embodiment of Figure 5 shows the use of two friction clutches C1, C2 but the embodiment of Figure 6 makes use of positive engagement splined clutches similar to those illustrated in Figure 4. These clutches include a single movable clutch member similar to the clutch member 44 in Figure 4. This clutch member is operable in the manner described in relation to Figure 4 to connect the input shaft 22 selectively to the annulus gear 8 of the first gearset or the carrier 14 of the second gearset. In other respects, the embodiment of Figure 6 is the same as that of Figure 5.

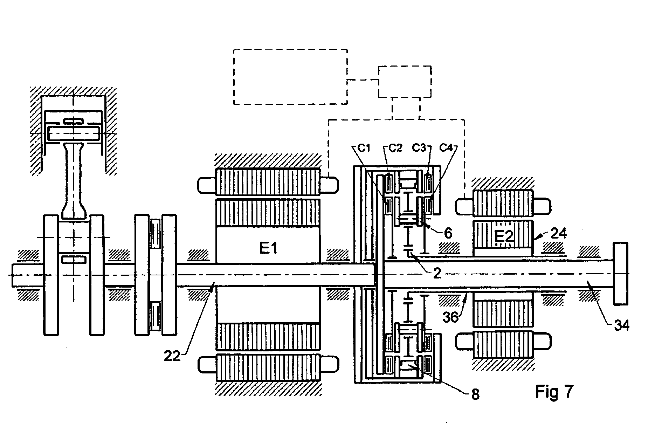

The embodiment of Figure 7 is again similar to Figure 5 but differs from it in two respects. Thus firstly, the rotor of the motor/generator E1 is connected directly to the input shaft to rotate with it and at the same speed and is not connected to it via reversing, step-up gearing and secondly the geartrain of Figure 5, which comprises two compounded 3 branch gearsets, is replaced by a geartrain similar to that of Figure 4 in that it consists of only a single 3 branch gearset. However, instead of the splined clutches in Figure 4, four friction clutches C1, C2, C3 and C4 are used. The clutches C3 and C4 are used to selectively connect the input shaft 22 to the annulus gear 8 and carrier 6, respectively, of the gearset whilst the clutches C1 and C2 are used to selectively connect the output shaft 34 to the carrier 6 and annulus gear 8, respectively, of the gear set. The rotor 24 of the motor/generator E2 is again connected to the sun gear 2 by means of a shaft 36.

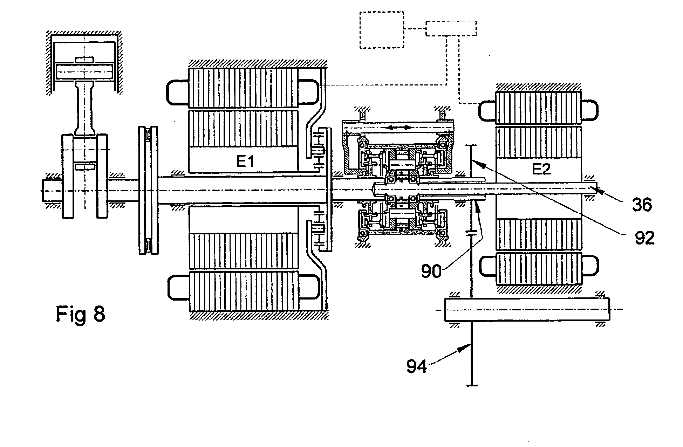

The embodiment of Figure 8 is very similar to that of Figure 5 but the geartrain of Figure 5 incorporating four friction clutches is replaced in Figure 8 by a geartrain including four splined clutches, the construction and operation of which is the same as described in connection with Figure 4. In this case, however, the output from the geartrain is transmitted to a sleeve 90 extending around the shaft 36 connecting the sun gear to the rotor of the motor/generator E2 and the sleeve 90 is connected to the final output shaft via two gearwheels 92,94.

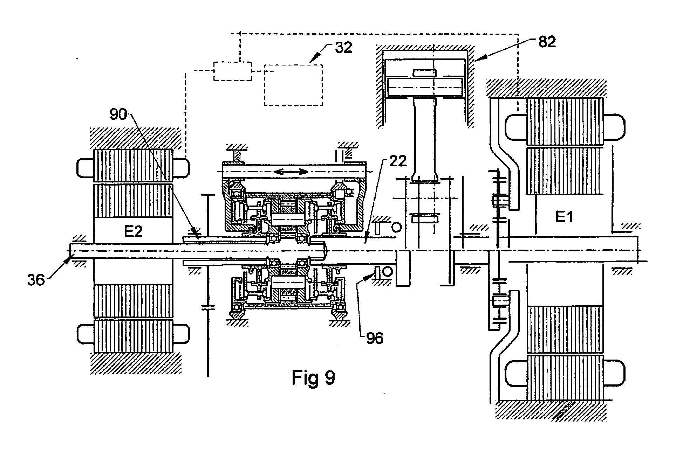

The embodiment of Figure 9 is similar to that of Figure 8 but in this case the engine 82 and the geartrain are situated between the two motor/generators. This transmission system is therefore particularly suited for use on a motorcycle because it enables the engine, which is the heaviest component, to be situated substantially on the fore and aft centreline of the motorcycle, thereby permitting the motorcycle to be balanced. This transmission system is suitable for a motorcycle of Hybrid type which is intended, on occasion, to be driven only by the motor/generator E2 acting as a motor powered by the battery 32. In this event, there would of course be a tendency for the motor/generator E2 to rotate not only the output of the geartrain, which is in this case again taken from a sleeve or hollow shaft 90 surrounding the shaft 36, but also the engine. This is of course undesirable and the input shaft 22 from the engine is therefore anchored to ground by a freewheel device 96, which will only permit the shaft 22 to rotate in one direction, that is to say in the direction in which it is driven by the engine 82, and thus will not permit the motor/generator E2 to drive the engine in the reverse direction.

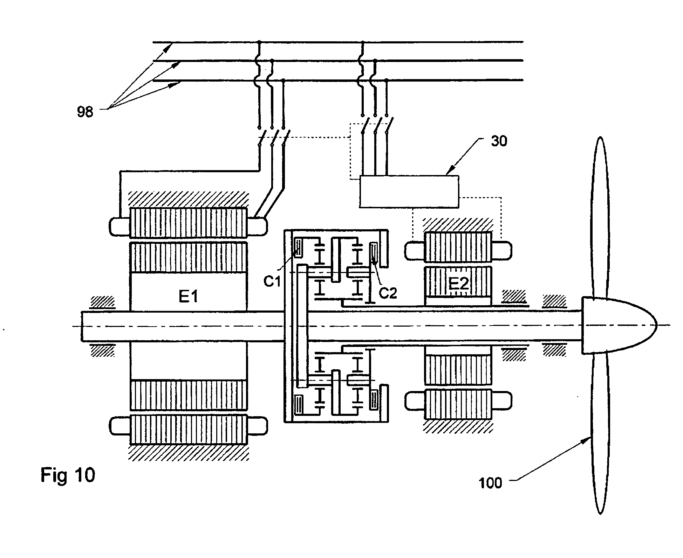

Figure 10 illustrates a transmission system in accordance with the invention incorporated in a wind turbine generator for supplying electrical power to the mains electricity power supply 98. The transmission system itself is much like that of Figure 1 but since this apparatus is generating power rather than consuming it, the requirements are reversed and one of the motor/generators E1 is therefore connected to the output of the transmission system and not its input. The motor/generator E1 therefore acts as a generator and generates three-phase electrical power which is supplied to the mains electrical power supply system 98. A further distinction is that it is the output rather than the input which is selectively connectable to the other planet carrier and the other annulus gear. In use, the wind turbine 100 is rotated by the wind and the control system automatically controls the speed of the motor/generator E1 to run synchronously regardless of the wind speed. In this case, there is of course no need of a battery or other electrical energy store since the controller 30 is connected to the mains electricity power supply.

## Claims

1. A transmission system including an input (22), an output (34) and an epicyclic geartrain comprising a sun gear (2) in mesh with a set of planet gears (4), which are rotatably carried by a planet carrier (6) and are in mesh with an annulus gear (8), the sun gear (2) being connected to rotate with the rotor (24) of one of two respective electric motor/generators, the electrical stator connections of which are connected together via a controller (30) arranged to control the flow of power between them, **characterised in that** the input (22) is connected to rotate with the rotor (20) of the other of the two motor/generators, that the input (22) is selectively connectable to the annulus gear (8) or the planet carrier (6) by first (46, 50) and second (48, 52) selectively operable clutches, respectively, and that the output (34) is selectively connectable to the planet carrier (6) or the annulus gear (8) by third (60, 62) and fourth (64, 66) selectively operable clutches, respectively, whereby the transmission system has two regimes.

2. A transmission system as claimed in Claim 1 in which the third (60, 62) and fourth (64, 66) clutches are controlled by the controller (30) and the control system is programmed to change from one regime to the other when the input speeds of the third and fourth clutches are substantially the same.

3. A transmission system including an input (22), an output (34) and an epicyclic geartrain comprising first and second epicyclic gearsets, the first gearset comprising a first sun gear (2) in mesh with a set of first planet gears (4), which are rotatably carried by a first planet carrier (6) and are in mesh with a first annulus gear (8), and the second gearset comprising a second sun gear (10), which is connected to rotate with the first sun gear (2) and is in mesh with a set of second planet gears (12), which are rotatably carried by a second planet carrier (14) and are in mesh with a second annulus gear (18), the two connected sun gears being connected to rotate with the rotor (24) of one of two electric motor/generators (24, 28; 20, 26), the electrical stator connections of which are connected together via a controller (30) arranged to control the flow of electrical power between them, **characterised in that** the input (22) is connected to rotate with the rotor (20) of the other of the two motor/generators, that one of the planet carriers (6) in one of the gearsets is permanently connected to rotate with the annulus gear (18) of the other gearset and that the input (22) is selectably connectable to the other of the planet carriers (14) or to the other of the annulus gears (8) by first and second selectively operable clutches (C1, C2), respectively, whereby the transmission system has two regimes.

4. A transmission system as claimed in Claim 1 in which the Ro ratio of the two gearsets, that is to say the ratio of the speed of rotation of the sun gear (2, 10) and the annulus gear (8, 18) when the planet carrier (6, 14) is held stationary, is substantially the same and the two sun gears (2, 10) are integral and constituted by a single sun gear.

5. A transmission system as claimed in Claim 4 in which the first planet gears (4) are the same as the second planet gears (12) and the first annulus gear (8) is the same as the second annulus gear (18).

6. A transmission system as claimed in claim 1 in which the first (C1; 46, 50) and second (C2; 48, 52) clutches are controlled by the controller (30) and the controller (30) is programmed to change from one regime to the other when the output speeds of the first and second clutches are substantially the same.

7. A transmission system as claimed in Claim 2 or 6 in which the or each gearset and their connections to the clutches are so constructed and the controller (30) is so programmed that when a change is effected from one regime to the other the speeds of each motor/generator is the same before and after the regime change.

8. A transmission system as claimed in any one of the preceding claims in which the selectively operable clutches (C1; C2; 46, 50; 48, 52) are dog clutches.

9. A transmission system as claimed in Claims 3 and 8 in which the other of the planet carriers (14) and the other of the annulus gears (8) are connected to respective sets of splines (52, 50) and the first and second clutches include a common movable clutch member (44) which is connected to rotate with the input shaft (22) and carries first and second sets of splines (46, 48), the clutch member (44) being movable between a position, in which the first set of splines (46) is in engagement with the splines (52) on the other of the planet carriers (14), and a position, in which the second set of splines (48) is in engagement with the splines (50) on the other of the annulus gears (8).

10. A transmission system as claimed in Claim 1 in which the planet carrier (6) is connected to two sets of splines and the annulus gear (8) is also connected to two sets of splines, the first and second clutches include a first common movable clutch member which is connected to rotate with the input shaft and carries first and second sets of splines and the third and fourth clutches include a second common movable clutch member which is connected to rotate with the output shaft and carries third and fourth sets of splines, the first and second clutch members being movable together between a position, in which the first set of splines on the first clutch member is in engagement with one of the sets of splines on the planet carrier and the third set of splines on the second clutch member is in engagement with one of the sets of splines on the annulus gear, and a position in which the second set of splines on the first clutch member is in engagement with the other set of splines on the annulus gear and the fourth set of splines on the second clutch member is in engagement with the other set of splines on the planet carrier.

11. A transmission system as claimed in any one of the preceding claims in combination with an internal combustion engine, the output shaft of which is connected to the input (22) of the transmission system.

12. A transmission system as claimed in claim 11 in which the output shaft of the engine is connected to the input (22) of the transmission system via a selectively operable clutch (84).

13. A transmission system as claimed in Claim 11 in which the engine is situated between the two motor/generators (20, 26; 24, 28).

14. A transmission system as claimed in Claim 13 in which the output shaft (22) of the engine is connected directly to one of the motor/generators of the epicyclic geartrain via a connection which includes a freewheel (6) which permits rotation in one direction only.

15. A transmission system as claimed in any one of the preceding claims whose input shaft (22) is connected to the output shaft of an internal combustion engine, in which the rotor (20) of one of the motor/generators is connected to the input by gearing (86, 88, 90, 92) so arranged that the rotor rotates in the opposite direction to the input (22), the gearing preferably being step-up gearing whose ratio is such that the engine and the said rotor (20) are torsionally balanced.

## Patentansprüche

1. Getriebesystem mit einem Eingang (22), einem Ausgang (34) und einem Planetengetriebe mit einem Sonnenrad (2) in Eingriff mit einer Gruppe von Planetenrädern (4), welche drehbar von einem Planetenradträger (6) getragen sind und in Eingriff mit einem Hohlrad (8) stehen, wobei das Sonnenrad (2) verbunden ist, um sich mit dem Rotor (24) eines von zwei entsprechenden elektrischen Motor/Generatoren zu drehen, deren elektrische Statoranschlüsse über eine Steuerung bzw. Regelung (30) miteinander verbunden sind, welche eingerichtet ist, den Leistungsfluss zwischen diesen zu steuern, **dadurch gekennzeichnet, dass** der Eingang (22) verbunden ist, um sich mit dem Rotor (20) des anderen der beiden Motor/Generatoren zu drehen, dass der Eingang (22) über erste (46, 50) bzw. zweite (48, 52) selektiv betätigbare Kupplungen selektiv mit dem Hohlrad (8) bzw. mit dem Planetenradträger (6) verbindbar ist, und dass der Ausgang (34) über dritte (60, 62) bzw. vierte (64, 66) selektiv betätigbare Kupplungen selektiv mit dem Planetenradträger (6) bzw. dem Hohlrad (8) verbindbar ist, wodurch das Getriebesystem zwei Betriebszustände aufweist.

2. Getriebesystem nach Anspruch 1, bei welchem die dritten (60, 62) und die vierten (64, 66) Kupplungen von der Steuerung (30) gesteuert sind und das Steuersystem programmiert ist, um von einem Betriebszustand in den anderen zu wechseln, wenn die Eingangsgeschwindigkeiten der dritten und vierten Kupplungen im Wesentlichen gleich sind.

3. Getriebesystem mit einem Eingang (22), einem Ausgang (34) und einem Planetengetriebe mit einem ersten und einem zweiten Planetensammelgetriebe, wobei das erste Sammelgetriebe ein erstes Sonnenrad (2) in Eingriff mit einer ersten Gruppe von Planetenrädern (4) aufweist, die drehbar von einem ersten Planetenradträger (6) getragen sind und in Eingriff mit einem ersten Hohlrad (8) stehen, und wobei das zweite Sammelgetriebe ein zweites Sonnenrad (10) aufweist, welches verbunden ist, um sich mit dem ersten Sonnenrad (2) zu drehen, und in Eingriff mit einer Gruppe von zweiten Planetenrädern (12) steht, welche drehbar von einem zweiten Planetenradträger (14) getragen sind und in Eingriff mit einem zweiten Hohlrad (18) stehen, wobei die beiden verbundenen Sonnenräder verbunden sind, um sich mit dem Rotor (24) eines von zwei elektrischen Motor/Generatoren (24, 28; 20, 26) zu drehen, deren elektrische Statoranschlüsse über eine Steuerung bzw. Regelung (30) miteinander verbunden sind, welche eingerichtet ist, den elektrischen Leistungsfluss zwischen diesen zu steuern, **dadurch gekennzeichnet, dass** der Eingang (22) verbunden ist, um sich mit dem Rotor (20) des anderen der beiden Motor/Generatoren zu drehen, dass einer der Planetenradträger (6) in einem der Sammelgetriebe permanent verbunden ist, um sich mit dem Hohlrad (18) des anderen Sammelgetriebes zu drehen, und dass der Eingang (22) über erste und zweite selektiv betätigbare Kupplungen (C1, C2) selektiv mit dem anderen Planetenradträger (14) bzw. dem anderen Hohlrad (8) verbindbar ist, wodurch das Getriebesystem zwei Betriebszustände aufweist.

4. Getriebesystem nach Anspruch 1, bei welchem das Ro-Verhältnis der beiden Sammelgetriebe, d.h. das Verhältnis der Rotationsgeschwindigkeit des Sonnenrads (2, 10) und des Hohlrads (8, 18) bei stationär gehaltenem Planetenradträger (6, 14), im Wesentlichen gleich ist und die beiden Sonnenräder (2, 10) integral und durch ein einziges Sonnenrad gebildet sind.

5. Getriebesystem nach Anspruch 4, bei welchem die ersten Planetenräder (4) die gleichen wie die zweiten Planetenräder (12) sind und das erste Hohlrad (8) das gleiche wie das zweite Hohlrad (18) ist.

6. Getriebesystem nach Anspruch 1, bei welchem die ersten (C1; 46, 50) und die zweiten (C2; 48, 52) Kupplungen von der Steuerung (30) gesteuert sind und die Steuerung programmiert ist, um von einem Betriebszustand in den anderen zu wechseln, wenn die Ausgangsgeschwindigkeiten der ersten und der zweiten Kupplungen im Wesentlichen gleich sind.

7. Getriebesystem nach Anspruch 2 oder 6, bei welchem das oder jedes Sammelgetriebe und deren Verbindungen zu den Kupplungen so konstruiert sind und die Steuerung (30) so programmiert ist, dass die Geschwindigkeit jedes Motor/Generators bei einem Wechsel von einem Betriebszustand in den anderen vor und nach dem Wechsel des Betriebszustands gleich ist.

8. Getriebesystem nach einem der vorhergehenden Ansprüche, bei welchem die selektiv betätigbaren Kupplungen (C1; C2; 46, 50; 48, 52) Klauenkupplungen sind.

9. Getriebesystem nach Anspruch 3 und 8, bei welchem der andere der Planetenradträger (14) und das andere Hohlrad (8) mit entsprechenden Gruppen von Keilwellen (52, 50) verbunden sind und die ersten und die zweiten Kupplungen ein gemeinsames bewegliches Kupplungsglied (44) enthalten, welches verbunden ist, um sich mit der Eingangswelle (22) zu drehen, und eine erste und eine zweite Gruppe von Keilwellen (46, 48) trägt, wobei das Kupplungsglied (44) zwischen einer Position, in der die erste Gruppe von Keilwellen (46) in Eingriff mit den Keilwellen (52) auf dem anderen Planetenradträger (14) steht, und einer Position, in der die zweite Gruppe von Keilwellen (48) in Eingriff mit den Keilwellen (50) auf dem anderen Hohlrad (8) steht, beweglich ist.

10. Getriebesystem nach Anspruch 1, bei welchem der Planetenradträger (6) mit zwei Gruppen von Keilwellen verbunden ist und das Hohlrad (8) ebenfalls mit zwei Gruppen von Keilwellen verbunden ist, die ersten und die zweiten Kupplungen ein erstes gemeinsames bewegliches Kupplungsglied aufweisen, welches verbunden ist, um sich mit der Eingangswelle zu drehen, und eine erste und eine zweite Gruppe von Keilwellen trägt, und die dritten und die vierten Kupplungen ein zweites gemeinsames bewegliches Kupplungsglied aufweisen, welches verbunden ist, um sich mit der Ausgangswelle zu drehen, und eine dritte und eine vierte Gruppe von Keilwellen trägt, wobei das erste und das zweite Kupplungsglied zusammen zwischen einer Position, in der die erste Gruppe von Keilwellen auf dem ersten Kupplungsglied in Eingriff mit einer der Gruppen von Keilwellen auf dem Planetenradträger und die dritte Gruppe von Keilwellen auf dem zweiten Kupplungsglied in Eingriff mit einer der Gruppen von Keilwellen auf dem Hohlrad stehen, und einer Position, in der die zweite Gruppe von Keilwellen auf dem ersten Kupplungsglied in Eingriff mit der anderen Gruppe von Keilwellen auf dem Hohlrad steht und die vierte Gruppe von Keilwellen auf dem zweiten Kupplungsglied in Eingriff mit der anderen Gruppe von Keilwellen auf dem Planetenradträger steht, beweglich ist.

11. Getriebesystem nach einem der vorhergehenden Ansprüche in Kombination mit einer Brennkraftmaschine, deren Ausgangswelle mit dem Eingang (22) des Getriebesystems verbunden ist.

12. Getriebesystem nach Anspruch 11, bei welchem die Ausgangswelle der Maschine über eine selektiv betätigbare Kupplung (84) mit dem Eingang (22) des Getriebesystems verbunden ist.

13. Getriebesystem nach Anspruch 11, bei welchem die Maschine zwischen den beiden Motor/Generatoren (20, 26; 24, 28) angeordnet ist.

14. Getriebesystem nach Anspruch 13, bei welchem die Ausgangswelle (22) der Maschine direkt mit einem der Motor/Generatoren des Planetengetriebes über eine Verbindung mit einem Freilauf (6) verbunden ist, der eine Rotation nur in eine Richtung gestattet.

15. Getriebesystem nach einem der vorhergehenden Ansprüche, dessen Eingangswelle (22) mit der Ausgangswelle einer Brennkraftmaschine verbunden ist, wobei der Rotor (20) eines der Motor/Generatoren mit dem Eingang über ein Zahnradgetriebe (86, 88, 90, 92) verbunden ist, welches so angeordnet ist, dass sich der Rotor entgegengesetzt zum Eingang (22) dreht, wobei das Zahnradgetriebe vorzugsweise ein Übersetzungsgetriebe ist, dessen Verhältnis derart ist, dass die Maschine und der Rotor (20) drehsymmetrisch sind.

## Revendications

1. Système de transmission comprenant une entrée (22), une sortie (34) et un train de pignons épicycloïdaux comprenant un pignon planétaire (2) en engrènement avec un jeu de pignons satellites (4), qui sont portés de façon rotative par un porte-satellite (6) et sont en engrènement avec une couronne (8), le pignon planétaire (2) étant relié pour tourner avec le rotor (24) d'un de deux moteurs/générateurs électriques respectifs, dont les connexions de stator électriques sont connectées l'une à l'autre par l'intermédiaire d'un dispositif de commande (30) agencé pour commander le flux d'énergie électrique entre elles, **caractérisé en ce que** l'entrée (22) est reliée pour tourner avec le rotor (20) de l'autre des deux moteurs/générateurs, que l'entrée (22) peut être reliée sélectivement à la couronne (8) ou au porte-satellite (6) par des premier (46, 50) et deuxième (48, 52) embrayages actionnables sélectivement, respectivement, et que la sortie (34) peut être reliée sélectivement au porte-satellite (6) ou à la couronne (8) par des troisième (60, 62) et quatrième (64, 66) embrayages actionnables sélectivement, respectivement, moyennant quoi le système de transmission possède deux régimes.

2. Système de transmission selon la revendication 1, dans lequel les troisième (60, 62) et quatrième (64, 66) embrayages sont commandés par le dispositif de commande (30) et le dispositif de commande est programmé pour changer d'un régime à l'autre lorsque les vitesses d'entrée des troisième et quatrième embrayages sont sensiblement les mêmes.

3. Système de transmission comprenant une entrée (22), une sortie (34) et un train de pignons épicycloïdaux comprenant des premier et second jeux de pignons épicycloïdaux, le premier jeu de pignons comprenant un premier pignon planétaire (2) en engrènement avec un jeu de premier pignons satellites (4), qui sont portés de façon rotative par un premier porte-satellite (6) et sont en engrènement avec une première couronne (8), et le second jeu de pignons comprenant un second pignon planétaire (10), qui est relié pour tourner avec le premier pignon planétaire (2) et est en engrènement avec un jeu de seconds pignons satellites (12), qui sont portés de façon rotative par un second porte-satellite (14) et sont en engrènement avec une seconde couronne (18), les deux pignons planétaires reliés étant reliés pour tourner avec le rotor (24) d'un de deux moteurs/générateurs électriques (24, 28 ; 20, 26), dont les connexions de stator électriques sont connectées l'une à l'autre par l'intermédiaire d'un dispositif de commande (30) agencé pour commander le flux d'énergie électrique entre elles, **caractérisé en ce que** l'entrée (22) est reliée pour tourner avec le rotor (20) de l'autre des deux moteurs/générateurs, qu'un des porte-satellites (6) dans un des jeux de pignons est relié en permanence pour tourner avec la couronne (18) de l'autre jeu de pignons et que l'entrée (22) peut être reliée de façon sélectionnable à l'autre des porte-satellites (14) ou à l'autre des couronnes (8) par des premier et deuxième embrayages actionnables sélectivement (C1, C2), respectivement, moyennant quoi le système de transmission possède deux régimes.

4. Système de transmission selon la revendication 1, dans lequel le rapport Ro des deux jeux de pignons, à savoir le rapport de la vitesse de rotation du pignon planétaire (2, 10) et de la couronne (8, 18) lorsque le porte-satellite (6, 14) est maintenu stationnaire, est sensiblement identique et les deux pignons planétaires (2, 10) sont intégraux et constitués par un seul pignon planétaire.

5. Système de transmission selon la revendication 4, dans lequel les premiers pignons satellites (4) sont identiques aux seconds pignons satellites (12) et la première couronne (8) est identique à la seconde couronne (18).

6. Système de transmission selon la revendication 1, dans lequel les premier (C1 ; 46, 50) et deuxième (C2 ; 48, 52) embrayages sont commandés par le dispositif de commande (30) et le dispositif de commande (30) est programmé pour changer d'un régime à l'autre lorsque les vitesses de sortie des premier et deuxième embrayages sont sensiblement identiques.

7. Système de transmission selon la revendication 2 ou 6, dans lequel le ou chaque jeu de pignons et leurs liaisons aux embrayages sont construits et le dispositif de commande (30) est programmé pour que, lorsqu'un changement est effectué d'un régime à l'autre, les vitesses de chaque moteur/générateur soient identiques avant et après le changement de régime.

8. Système de transmission selon une quelconque des revendications précédentes, dans lequel les embrayages actionnables sélectivement (C1 ; C2 ; 46, 50 ; 48, 52) sont des embrayages à crabots.

9. Système de transmission selon Claims 3 et 8, dans lequel l'autre des porte-satellites (14) et l'autre des couronnes (8) sont reliés à des jeux respectifs de cannelures (52, 50) et les premier et deuxième embrayages comprennent un élément embrayage mobile commun (44) qui est relié pour tourner avec l'arbre d'entrée (22) et porte des premier et second jeux de cannelures (46, 48), l'élément embrayage (44) étant mobile entre une position, dans laquelle le premier jeu de cannelures (46) est en prise avec les cannelures (52) sur l'autre des porte-satellites (14), et une position, dans laquelle le second jeu de cannelures (48) est en prise avec les cannelures (50) sur l'autre des couronnes (8).

10. Système de transmission selon la revendication 1, dans lequel le porte-satellite (6) est relié à deux jeux de cannelures et la couronne (8) est également reliée à deux jeux de cannelures, les premier et deuxième embrayages comprennent un premier élément embrayage mobile commun qui est relié pour tourner avec l'arbre d'entrée et porte des premier et deuxième jeux de cannelures et les troisième et quatrième embrayages comprennent un second élément embrayage mobile commun qui est relié pour tourner avec l'arbre de sortie et porte des troisième et quatrième jeux de cannelures, les premier et second élément embrayages étant mobiles ensemble entre une position, dans laquelle le premier jeu de cannelures sur le premier élément embrayage est en prise avec un des jeux de cannelures sur le porte-satellite et le troisième jeu de cannelures sur le second élément embrayage est en prise avec un des jeux de cannelures sur la couronne, et une position dans laquelle le deuxième jeu de cannelures sur le premier élément embrayage est en prise avec l'autre jeu de cannelures sur la couronne et le quatrième jeu de cannelures sur le second élément embrayage est en prise avec l'autre jeu de cannelures sur le porte-satellite.

11. Système de transmission selon une quelconque des revendications précédentes en association avec un moteur à combustion interne, dont l'arbre de sortie est relié à l'entrée (22) du système de transmission.

12. Système de transmission selon la revendication 11, dans lequel l'arbre de sortie du moteur est relié à l'entrée (22) du système de transmission par l'intermédiaire d'un embrayage actionnable sélectivement (84).

13. Système de transmission selon la revendication 11, dans lequel le moteur est situé entre les deux moteurs/générateurs (20, 26 ; 24, 28).

14. Système de transmission selon la revendication 13, dans lequel l'arbre de sortie (22) du moteur est relié directement à un des moteurs/générateurs du train de pignons épicycloïdaux par l'intermédiaire d'une liaison qui comprend une roue libre (6) qui permet la rotation dans une direction seulement.

15. Système de transmission selon une quelconque des revendications précédentes, dont l'arbre d'entrée (22) est relié à l'arbre de sortie d'un moteur à combustion interne, dans lequel le rotor (20) d'un des moteurs/générateurs est relié à l'entrée par un engrenage (86, 88, 90, 92) agencé pour que le rotor tourne dans la direction opposée à l'entrée (22), l'engrenage étant de préférence un engrenage de transmission dont le rapport est tel que le moteur et ledit rotor (20) sont équilibrés en torsion.
